# EUROPÄISCHE PATENTSCHRIFT

(11) **EP 4 532 957 B1**
(45) Veröffentlichungstag und Bekanntmachung des Hinweises auf die Patenterteilung: **11.03.2026**
(21) Anmeldenummer: 23726865.1
(22) Anmeldetag: 02.05.2023
(51) Int. Cl.: F16H 57/033

(54) **ADAPTER, INSBESONDERE FÜR EINEN EIN GETRIEBE UND EINEN ELEKTROMOTOR UMFASSENDEN GETRIEBEMOTOR**
ADAPTER, IN PARTICULAR FOR A GEARED MOTOR COMPRISING A GEARBOX AND AN ELECTRIC MOTOR
ADAPTATEUR, EN PARTICULIER POUR UN MOTORÉDUCTEUR COMPRENANT UNE BOÎTE À ENGRENAGES ET UN MOTEUR ÉLECTRIQUE

(30) Priorität: 26.05.2022 CN 202210588195; 12.09.2022 DE 102022003342
(43) Veröffentlichungstag der Anmeldung: 09.04.2025
(73) Patentinhaber: SEW-Eurodrive GmbH & Co, 76646 Bruchsal (DE)
(72) Erfinder: QIONGHUA, Gao, Tianjin (CN)
(86) Internationale Anmeldenummer: PCT/EP2023/025199
(87) Internationale Veröffentlichungsnummer: WO 2023/227236

(56) Entgegenhaltungen:
- WO-A1-2014/079998
- DE-A1- 10 305 434
- DE-A1- 102013 001 161

## Beschreibung

Die Erfindung betrifft einen Adapter.

Es ist allgemein bekannt, dass ein Adapter zwischen zwei Antriebskomponenten, wie beispielsweise zwischen einem Elektromotor und einem Getriebe, anordenbar ist, um als Schnittstelle in einer Baureihe eine hohe Anzahl von Varianten bei geringer Anzahl von Teilen zu ermöglichen.

Aus der DE 196 37 361 A1 ist ein Adapter bekannt.

Aus der DE 10 2018 114 773 A1 ist eine Anordnung zur Transportabdeckung eines offenen Getriebegehäuses bekannt.

Aus der DE 10 2013 000 849 A1 ist ein Antrieb bekannt.

Aus der WO 2014/079998 A1 ist als nächstliegender Stand der Technik eine Adapterbaugruppe bekannt.

Aus der DE 103 05 434 A1 ist ein Adapter bekannt.

Aus der DE 10 2013 011161 A1 ist ein Getriebemotor bekannt.

Der Erfindung liegt daher die Aufgabe zugrunde, einen Adapter weiterzubilden, wobei eine erhöhte Sicherheit erreicht werden soll.

Erfindungsgemäß wird die Aufgabe bei dem Adapter nach den in Anspruch 1 angegebenen Merkmalen gelöst.

Wichtige Merkmale der Erfindung bei dem Adapter, insbesondere für einen ein Getriebe und einen Elektromotor umfassenden Getriebemotor, sind, dass der Adapter ein Adaptergehäuse und einen mit dem Adaptergehäuse verbundenen Lagerflansch aufweist,
wobei das Adaptergehäuse eine Kupplung radial umgibt,
wobei im Lagerflansch ein erstes Lager und ein zweites Lager aufgenommen sind, insbesondere deren Innenringe auf die Adapterwelle aufgesteckt sind,
insbesondere wobei das erste Lager und das zweite Lager die Adapterwelle drehbar lagern,
wobei das Adaptergehäuse auf seiner vom Lageflansch abgewandten Seite mit einer Verschlussplatte verbunden ist,
wobei die Kupplung gehäusebildend vom Adaptergehäuse und der Verschlussplatte umgeben ist.

Von Vorteil ist dabei, dass die Sicherheit erhöht ist. Denn das Auftreten von Transportschäden, wie Eindringen von Wasser während des Transports oder Rostschäden, sind verhinderbar beziehungsweise erkennbar.

Denn die Verschlussplatte verhindert das Eintreten von Flüssigkeit in den Innenraum des Adaptergehäuses.

Bei einer vorteilhaften Ausgestaltung ist die Kupplung einerseits mit der Adapterwelle verbunden, insbesondere formschlüssig oder stoffschlüssig, und andererseits mit einer Rotorwelle eines Elektromotors verbindbar ist, dessen Flansch oder Gehäuse mit dem Adaptergehäuse verbindbar ist, insbesondere nach Entfernen der Verschlussplatte. Von Vorteil ist dabei, dass die Kupplung innerhalb des Adapters anordenbar ist und somit geschützt ist.

Bei einer vorteilhaften Ausgestaltung ragt die Adapterwelle durch den Lagerflansch hindurch und in den von der Verschlussplatte und vom Adaptergehäuse umgebenen Innenraum hinein.

Von Vorteil ist dabei, dass die Verbindung mit der Rotorwelle mittels der Kupplung innerhalb des Adapters anordenbar ist.

Bei einer vorteilhaften Ausgestaltung sind Schraubenköpfe von Schrauben, welche in Gewindebohrungen, insbesondere axial gerichteten Gewindebohrungen, des Adaptergehäuses eingeschraubt, die Verschlussplatte an das Adaptergehäuse andrücken. Von Vorteil ist dabei, dass eine einfache und schnell ausführbare Verbindung erreicht ist.

Bei einer vorteilhaften Ausgestaltung ist die Verschlussplatte aus Kunststoff gefertigt, insbesondere aus optisch transparentem Kunststoff. Von Vorteil ist dabei, dass eine einfache und kostengünstige Herstellung ermöglicht ist.

Bei einer anderen vorteilhaften Ausgestaltung ist die Verschlussplatte aus demselben Stahl gefertigt und das Adaptergehäuse ebenfalls aus einem Stahl oder einem Stahlguss. Von Vorteil ist dabei, dass ein mechanisch stabiler Schutz gewährleistbar ist.

Bei einer vorteilhaften Ausgestaltung ist eine durchgehende Ausnehmung des Adaptergehäuses von einem optisch transparenten Fensterteil abgedeckt,

insbesondere wobei das Fensterteil mittels Schrauben an das Adaptergehäuse angedrückt ist. Von Vorteil ist dabei, dass eine einfache kostengünstige Befestigung ermöglicht ist.

Erfindungsgemäß münden durch das Adaptergehäuse durchgehende Durchgangsbohrungen in eine ringförmige Vertiefung des Adaptergehäuses, insbesondere an dem dem Lagerflansch nächstbenachbarten Bereich der Vertiefung,

insbesondere wobei die Ringachse der ringförmigen Vertiefung koaxial zur Drehachse der Rotorwelle ausgerichtet ist. Von Vorteil ist dabei, dass eventuell eingedrungenes Wasser abfließt.

Bei einer vorteilhaften Ausgestaltung ist eine Dichtung in einer durch das Adaptergehäuse durchgehenden Bohrung aufgenommen, wobei die Bohrung als Axialbohrung ausgeführt ist in einer radial innerhalb der Vertiefung ausgebildeten Erhebung des Adaptergehäuses, insbesondere wobei die Dichtung bündig abschließt mit der Erhebung und/oder wobei die Dichtung in axialer Richtung gleich weit oder weiter entfernt ist vom Lagerflansch als die Erhebung,

insbesondere wobei die Dichtung zur Adapterwelle hin abdichtet. Von Vorteil ist dabei, dass die Schutzart erhöht ist. Insbesondere ist die Lagerung zusätzlich vor eventuell eindringendem Wasser geschützt.

Bei einer vorteilhaften Ausgestaltung ist der von der Dichtung in axialer Richtung überdeckte Bereich von dem von der Erhebung in axialer Richtung überdeckten Bereich umfasst,
insbesondere wobei
der vom Lagerflansch am weitesten entfernte axiale Rand des von der Dichtung in axialer Richtung überdeckten Bereichs
dem vom Lagerflansch am weitesten entfernte axiale Rand des von der Erhebung in axialer Richtung überdeckten Bereichs
gleicht. Von Vorteil ist dabei, dass die Dichtung bündig angebaut ist an die die Dichtung aufnehmende Erhebung des Lagerflansches. Somit fließt Wasser aus diesem Bereich auch bei vertikaler Orientierung der Drehachse der Adapterwelle ab, da es sich nicht aufstauen kann.

Erfindungsgemäß weisen die Bohrungsachse der Durchgangsbohrungen jeweils einen Winkel zur Drehachse der Adapterwelle auf,
wobei der Betrag des Winkels zwischen 10° und 80° beträgt. Von Vorteil ist dabei, dass ein Abfließen von in dem ringförmigen Bereich angesammeltem Wasser ermöglicht ist.

Bei einer vorteilhaften Ausgestaltung überragt das Adaptergehäuse den Lagerflansch, insbesondere an dem Berührbereich zwischen Adaptergehäuse und Lagerflansch, radial,
wobei die Durchgangsbohrungen in dem überragenden Bereich des Adaptergehäuses in die Umgebung münden. Von Vorteil ist dabei, dass die Durchgangsbohrungen in Gravitationsrichtung nach unten in die Umgebung münden, wenn die Drehachse der Adapterwelle in vertikaler Richtung ausgerichtet ist. Somit ist es verhindert, dass Regen in die Durchgangsbohrungen eindringt.

Bei einer vorteilhaften Ausgestaltung ist eine weitere Dichtung auf der von der Dichtung axial abgewandten Seite der Lagerung, insbesondere der aus den beiden Lagern gebildeten Lagerung, im Lagerflansch aufgenommen, insbesondere und diese weitere Dichtung ebenfalls zur Adapterwelle hin abdichtet. Von Vorteil ist dabei, dass die Schutzart erhöht ist.

Bei einer vorteilhaften Ausgestaltung ist das Adaptergehäuse glockenförmig ausgeführt. Von Vorteil ist dabei, dass der Lagerflansch bei vertikaler Ausrichtung der Adapterwelle radial weniger ausgedehnt ist als das Adaptergehäuse. Von Vorteil ist somit, dass ein Ableiten von Regen in einfacher Weise ermöglicht ist. Insbesondere ist der Lagerflansch radial weniger ausgedehnt und daher vom Adaptergehäuse gegen Regen schützbar, wenn die Drehachse der Adapterwelle in vertikaler Richtung ausgerichtet ist.

Bei einer vorteilhaften Ausgestaltung ist das Adaptergehäuse auf seiner vom Lagerflansch axial abgewandten Seite radial breiter als auf seiner dem Lagerflansch zugewandten Seite. Von Vorteil ist dabei, dass das Bohrbild der Verbindungsschrauben, welche den Elektromotor mit dem Adaptergehäuse verbinden, radial weiter ausgedehnt ist als das Bohrbild der Verbindungsschrauben, welche den Lagerflansch mit dem Getriebe verbinden. Von Vorteil ist weiter, dass eine Regenschirmwirkung durch das Adaptergehäuse bewirkbar ist.

Bei einer vorteilhaften Ausgestaltung ist der Außenring des zweiten Lagers teilweise im Lagerflansch und teilweise im Adaptergehäuse aufgenommen,
insbesondere sodass der Außenring den Lagerflansch zum Adaptergehäuse zentriert. Von Vorteil ist dabei, dass die Zentrierung des Lagerflansches zum Adaptergehäuse mittels des Außenrings des zweiten Lagers bewirkt wird. Zwischen Lagerflansch und Adaptergehäuse ist zur Verbesserung der Schutzart eine Dichtung, insbesondere Flachdichtung anordenbar.

Bei einer vorteilhaften Ausgestaltung ist das Fensterteil derart am Adaptergehäuse angeordnet ist, dass bei entferntem Fensterteil durch die Ausnehmung des Adapterteils die Kupplung betätigbar. Von Vorteil ist dabei, dass eine einfache Herstellung, Betätigung und Wartung ermöglicht ist.

Bei einer vorteilhaften Ausgestaltung umfasst der von der Verschlussplatte überdeckte Radialabstandsbereich den von dem Adaptergehäuse und den von dem Lagerflansch überdeckten Radialabstandsbereich. Von Vorteil ist dabei, dass das Eindringen von Regen bei vertikaler Ausrichtung der Adapterwelle verhindert ist.

Wichtige Merkmale bei dem Getriebemotor mit Adapter sind, dass
auf der vom Adaptergehäuse abgewandten Seite des Lagerflansches ein Getriebegehäuseteil eines Getriebes des Getriebemotors mit dem Lagerflansch verbunden ist,
insbesondere wobei die Adapterwelle als eintreibende Welle des Getriebes fungiert und drehfest mit einem Verzahnteil, insbesondere Ritzel, des Getriebes verbunden ist,
insbesondere wobei nach entfernter Verschlussplatte ein Flanschteil oder Gehäuseteil eines Elektromotors des Getriebemotors mit dem Adaptergehäuse verbunden ist. Von Vorteil ist dabei, dass das Getriebe mit dem Lagerflansch vorkomplettierbar ist und transportierbar ist. Dabei ist das Eindringen von Wasser in den Adapter erfindungsgemäß verhindert und das Risiko von unerkannten Rostschäden verringert.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

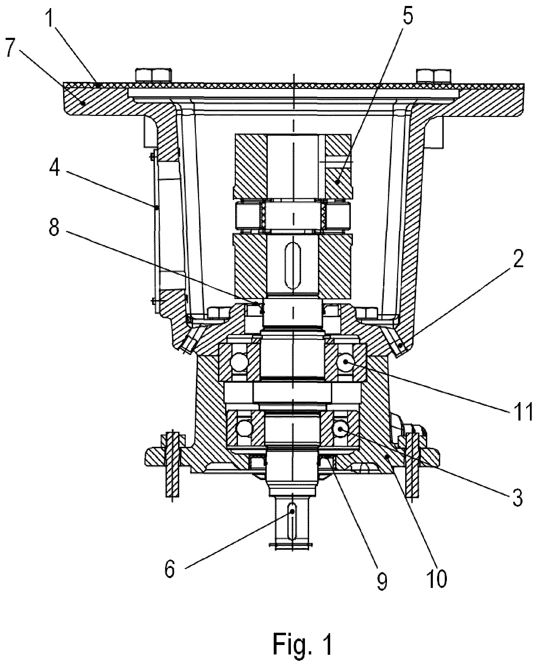

In der Figur 1 ist ein erfindungsgemäßer Adapter eines Getriebemotors in Schnittansicht dargestellt.

Wie in Figur 1 dargestellt, weist der Adapter ein insbesondere glockenförmiges Adaptergehäuse 7 auf, das mit einem Flanschteil eines Elektromotors des Getriebemotors verbindbar ist.

Auf der vom Elektromotor abgewandten Seite des Adaptergehäuses 7 ist das Adaptergehäuse 7 mit einem Lagerflansch 10 des Adapters verbunden.

Der Lagerflansch 10 ist mit dem Gehäuse eines Getriebes des Getriebemotors verbunden.

Im Lagerflansch 10 ist ein erstes Lager 3 und ein zweites Lager 11 aufgenommen, welche zur drehbaren Lagerung einer Adapterwelle 6 des Adapters wirksam sind.

Im Lagerflansch 10 ist eine Dichtung 9 aufgenommen, welche vom Lagerflansch 10 hin zur Adapterwelle 6 hin abdichtet. Die Dichtung 9 ist vorzugsweise als Wellendichtring ausgeführt.

Die Dichtung 9 ist auf der vom zweiten Lager 11 axial abgewandten Seite des ersten Lagers 3 angeordnet.

Auf der vom ersten Lager 3 axial abgewandten Seite des zweiten Lagers 11 ist eine weitere Dichtung 8 angeordnet, die ebenfalls im Lagerflansch 10 aufgenommen ist und zur Adapterwelle 6 hin abdichtet, insbesondere wobei die Dichtung 8 als Wellendichtring ausgeführt ist.

Vorzugsweise ist das Getriebe in Gravitationsrichtung unterhalb des Adapters angeordnet, insbesondere beim Transport.

Beim Transport wird der Getriebemotor ohne den Elektromotor transportiert. Somit wäre die zum Motor hin zugewandte Seite des Adapters offen und könnte von Regenwasser oder Schmutz beaufschlagt werden, was zu Schäden führen kann.

Zur Verringerung des Risikos ist im Adaptergehäuse 7 ein optisch transparentes Fensterteil angeordnet, mittels dessen im Innenraum des Adapters auftretende Rostschäden oder anstehende Wassermengen erkennbar sind. Außerdem ist das Fensterteil 4 mit Schrauben am Adaptergehäuse 7 befestigt, nach deren Lösen die Klemmschraube einer Kupplung 5, insbesondere Klemmkupplung, betätigbar ist, welche die Adapterwelle 6 mit der Rotorwelle des Elektromotors verbindbar macht.

Des Weiteren weist das Adaptergehäuse an seiner dem Getriebe zugewandten Endbereich des Innenraums innerhalb des Adaptergehäuses 7 eine ringförmige in Umfangsrichtung umlaufende Vertiefung auf, in welcher sich Flüssigkeit ansammeln würde, wenn sie in den Innenraum eingedrungen wäre.

Durch das Adaptergehäuse durchgehende Durchgangsbohrungen 2 münden in die ringförmige Vertiefung, insbesondere sodass in der Vertiefung angesammelte Flüssigkeit durch die Durchgangsbohrungen 2 abfließt.

Dabei münden die Durchgangsbohrungen 2 in die äußere Umgebung an einer axialen Stelle, die näher am Lagerflansch 10 ist als die Mündung der Durchgangsbohrungen 2 in den Innenraum.

Insbesondere liegt die Mündung in die äußere Umgebung auf einem größeren Radialabstand als dem größten Radialabstand des Lagerflansches 10 entspricht.

Auf der vom Lagerflansch 10 abgewandten Seite des Adaptergehäuses ist eine Verschlussplatte 1 auf das Adaptergehäuse 7 aufgesetzt und ist mit diesem verbunden, insbesondere mittels Schrauben, welche in Gewindebohrungen des Adaptergehäuses 7eingeschraubt sind und deren Schraubenköpfe die Verschlussplatte 1 andrücken, insbesondere auf der vom Adaptergehäuse 7 abgewandten Seite der Verschlussplatte 1.

Die Bohrungsachse der Durchgangsbohrungen 2 weist zu der Drehachse der Adapterwelle 6 einen Winkel von weniger als 80° auf, insbesondere und mehr als 10°.

Das Adaptergehäuse 7 ragt über den Lagerflansch 10 radial hervor. Die Durchgangsbohrungen 2 münden an diesem radial hervorragenden Bereich des Adaptergehäuses 7 in die Umgebung.

Da die Lagerung der Adapterwelle 6, also das erste Lager 3 und das zweite Lager 11, axial beidseitig durch je eine Dichtung (8, 9), insbesondere je einen Wellendichtring, abgedichtet ist, ist die Lagerung auch vor Eintreten von Wasser geschützt.

Die der Verschlussplatte 1 zugewandte Dichtung 8 weist einen geringeren Abstand zur Verschlussplatte 1 auf als die dem Lagerflansch axial nächstbenachbarte Stelle der ringförmigen Vertiefung.

Die Dichtung 8 schließt sich bündig an die axiale Stirnfläche des Lagerflansches 10 an und stellt somit den axial der Verschlussplatte 1 am nächsten kommenden Bereich dar, der radial innerhalb der Vertiefung angeordnet ist. Insbesondere bei vertikaler Ausrichtung ist also dieser Bereich der höchste Bereich radial innerhalb der ringförmigen Vertiefung, so dass Wasser von diesem Bereich stets abfließt in die Vertiefung.

Die Verschlussplatte 1 ist vorzugsweise aus einem Kunststoff, insbesondere aus Plastik, hergestellt

Bei weiteren erfindungsgemäßen Ausführungsbeispielen wird die Verschlussplatte aus Metall ausgeführt.

### Bezugszeichenliste

1 Verschlussplatte
2 Durchgangsbohrung
3 erstes Lager
4 Fensterteil
5 Kupplung
6 Adapterwelle
7 Adaptergehäuse
8 Dichtung
9 Dichtung
10 Lagerflansch
11 zweites Lager

## Patentansprüche

1. Adapter,
wobei der Adapter ein Adaptergehäuse (7) und einen mit dem Adaptergehäuse (7) verbundenen Lagerflansch (10) aufweist,
wobei das Adaptergehäuse (7) eine Kupplung (5) radial umgibt,
wobei im Lagerflansch (10) ein erstes Lager (3) und ein zweites Lager (11) aufgenommen sind,
wobei das Adaptergehäuse (7) auf seiner vom Lagerflansch (10) abgewandten Seite mit einer Verschlussplatte (1) verbunden ist,
wobei die Kupplung (5) gehäusebildend vom Adaptergehäuse (7) und der Verschlussplatte (1) umgeben ist,
**dadurch gekennzeichnet, dass**
durch das Adaptergehäuse (7) durchgehende Durchgangsbohrungen (2) in eine ringförmige Vertiefung des Adaptergehäuses (7) münden,
wobei die Bohrungsachse der Durchgangsbohrungen (2) jeweils einen Winkel zur Drehachse der Adapterwelle (6) aufweisen,
wobei der Betrag des Winkels zwischen 10° und 80° beträgt.

2. Adapter nach Anspruch 1,
**dadurch gekennzeichnet, dass**
die Kupplung (5) einerseits mit der Adapterwelle (6) verbunden ist und andererseits mit einer Rotorwelle eines Elektromotors verbindbar ist, dessen Flansch oder Gehäuse mit dem Adaptergehäuse (7) verbindbar ist.

3. Adapter nach einem der vorangegangenen Ansprüche,
**dadurch gekennzeichnet, dass**
die Adapterwelle (6) durch den Lagerflansch (10) hindurch ragt und in den von der Verschlussplatte (1) und vom Adaptergehäuse (7) umgebenen Innenraum hineinragt.

4. Adapter nach einem der vorangegangenen Ansprüche,
**dadurch gekennzeichnet, dass**
Schraubenköpfe von Schrauben, welche in Gewindebohrungen des Adaptergehäuses (7) eingeschraubt sind, die Verschlussplatte (1) an das Adaptergehäuse (7) andrücken.

5. Adapter nach einem der vorangegangenen Ansprüche,
**dadurch gekennzeichnet, dass**
eine durchgehende Ausnehmung des Adaptergehäuses (7) von einem optisch transparenten Fensterteil (4) abgedeckt ist.

6. Adapter nach einem der vorangegangenen Ansprüche,
**dadurch gekennzeichnet, dass**
durch das Adaptergehäuse (7) durchgehende Durchgangsbohrungen (2) in die ringförmige
Vertiefung des Adaptergehäuses (7) münden, an dem dem Lagerflansch (10) nächstbenachbarten Bereich der Vertiefung.

7. Adapter nach einem der vorangegangenen Ansprüche,
**dadurch gekennzeichnet, dass**
eine Dichtung (8) in einer durch das Adaptergehäuse (7) durchgehenden Bohrung aufgenommen ist, wobei die Bohrung als Axialbohrung ausgeführt ist in einer radial innerhalb der Vertiefung ausgebildeten Erhebung des Adaptergehäuses (7).

8. Adapter nach einem der vorangegangenen Ansprüche,
**dadurch gekennzeichnet, dass**
der von der Dichtung (8) in axialer Richtung überdeckte Bereich von dem von der Erhebung in axialer Richtung überdeckten Bereich umfasst ist.

9. Adapter nach einem der vorangegangenen Ansprüche,
**dadurch gekennzeichnet, dass**
das Adaptergehäuse (7) den Lagerflansch (10) radial überragt,
wobei die Durchgangsbohrungen (2) in dem überragenden Bereich des Adaptergehäuses (7) in die Umgebung münden.

10. Adapter nach einem der vorangegangenen Ansprüche,
**dadurch gekennzeichnet, dass**
eine weitere Dichtung auf der von der Dichtung (8) axial abgewandten Seite der Lagerung im Lagerflansch (10) aufgenommen ist.

11. Adapter nach einem der vorangegangenen Ansprüche,
**dadurch gekennzeichnet, dass**
das Adaptergehäuse (7) auf seiner vom Lagerflansch (10) axial abgewandten Seite radial breiter ist als auf seiner dem Lagerflansch (10) zugewandten Seite.

12. Adapter nach einem der vorangegangenen Ansprüche,
**dadurch gekennzeichnet, dass**
der Außenring des zweiten Lagers (11) teilweise im Lagerflansch (10) und teilweise im Adaptergehäuse (7) aufgenommen ist.

13. Adapter nach Anspruch 5,
**dadurch gekennzeichnet, dass**
das Fensterteil (4) derart am Adaptergehäuse (7) angeordnet ist, dass bei entferntem Fensterteil (4) durch die Ausnehmung des Adapterteils die Kupplung (5) betätigbar ist.

14. Adapter nach einem der vorangegangenen Ansprüche,
**dadurch gekennzeichnet, dass**
der von der Verschlussplatte (1) überdeckte Radialabstandsbereich den von dem Adaptergehäuse (7) und den von dem Lagerflansch (10) überdeckten Radialabstandsbereich umfasst.

15. Getriebemotor mit Adapter nach einem der vorangegangenen Ansprüche,
**dadurch gekennzeichnet, dass**
auf der vom Adaptergehäuse (7) abgewandten Seite des Lagerflansches (10) ein Getriebegehäuseteil eines Getriebes des Getriebemotors mit dem Lagerflansch (10) verbunden ist.

## Claims

1. An adapter,
wherein the adapter has an adapter housing (7) and a bearing flange (10) connected to the adapter housing (7),
wherein the adapter housing (7) radially surrounds a coupling (5),
wherein a first bearing (3) and a second bearing (11) are received in the bearing flange (10),
wherein the adapter housing (7) is connected on its side which faces away from the bearing flange (10) to a closure plate (1),
wherein the coupling (5) is surrounded, forming a housing, by the adapter housing (7) and the closure plate (1),
**characterised in that**
through-bores (2) which pass through the adapter housing (7) open into an annular indentation in the adapter housing (7),
with the bore axis of the through-bores (2) being in each case at an angle to the axis of rotation of the adapter shaft (6),
with the amount of the angle being between 10° and 80°.

2. An adapter according to claim 1,
**characterised in that**
the coupling (5) on one hand is connected to the adapter shaft (6) and on the other hand is connectable to a rotor shaft of an electric motor, the flange or housing of which is connectable to the adapter housing (7).

3. An adapter according to one of the preceding claims,
**characterised in that**
the adapter shaft (6) protrudes through the bearing flange (10) and protrudes into the interior which is surrounded by the closure plate (1) and by the adapter housing (7).

4. An adapter according to one of the preceding claims,
**characterised in that**
screw heads of screws which are screwed into threaded bores in the adapter housing (7) press the closure plate (1) against the adapter housing (7).

5. An adapter according to one of the preceding claims,
**characterised in that**
an uninterrupted cutout in the adapter housing (7) is covered by an optically transparent window part (4).

6. An adapter according to one of the preceding claims,
**characterised in that**
through-bores (2) which pass through the adapter housing (7) open into the annular indentation in the adapter housing (7), on that region of the indentation next-adjacent to the bearing flange (10).

7. An adapter according to one of the preceding claims,
**characterised in that**
a seal (8) is received in a bore which passes through the adapter housing (7), the bore being embodied as an axial bore in an elevation of the adapter housing (7) which is formed radially within the indentation.

8. An adapter according to one of the preceding claims,
**characterised in that**
the region covered in the axial direction by the seal (8) is encompassed by the region covered in the axial direction by the elevation.

9. An adapter according to one of the preceding claims,
**characterised in that**
the adapter housing (7) protrudes radially over the bearing flange (10),
with the through-bores (2) in the protruding region of the adapter housing (7) opening into the surroundings.

10. An adapter according to one of the preceding claims,
**characterised in that**
a further seal is received in the bearing flange (10) on that side of the bearing arrangement which faces away axially from the seal (8).

11. An adapter according to one of the preceding claims,
**characterised in that**
the adapter housing (7) on its side which faces away axially from the bearing flange (10) is radially wider than on its side which faces the bearing flange (10).

12. An adapter according to one of the preceding claims,
**characterised in that**
the outer ring of the second bearing (11) is received partly in the bearing flange (10) and partly in the adapter housing (7).

13. An adapter according to claim 5,
**characterised in that**
the window part (4) is arranged on the adapter housing (7) in such a way that when the window part (4) is removed the coupling (5) can be actuated through the cutout in the adapter part.

14. An adapter according to one of the preceding claims,
**characterised in that**
the radial distance region covered by the closure plate (1) encompasses the radial distance region covered by the adapter housing (7) and the one covered by the bearing flange (10).

15. A geared motor with an adapter according to one of the preceding claims, **characterised in that**
on that side of the bearing flange (10) which faces away from the adapter housing (7) a gear-unit housing part of a gear unit of the geared motor is connected to the bearing flange (10).

## Revendications

1. Adaptateur ;
l'adaptateur présentant un carter d'adaptateur (7) et une bride de palier (10) reliée au carter d'adaptateur (7),
le carter d'adaptateur (7) entourant radialement un accouplement (5),
un premier palier (3) et un second palier (11) étant accueillis dans la bride de palier (10),
le carter d'adaptateur (7) étant relié à une plaque de fermeture (1) sur son côté opposé à la bride de palier (10),
l'accouplement (5) étant entouré, ce qui forme carter, par le carter d'adaptateur (7) et la plaque de fermeture (1),
**caractérisé en ce que**
des alésages traversants (2) traversant le carter d'adaptateur (7) débouchent dans un renfoncement annulaire du carter d'adaptateur (7),
l'axe d'alésage des alésages traversants (2) présentant respectivement un angle par rapport à l'axe de rotation de l'arbre d'adaptateur (6),
la valeur de l'angle étant comprise entre 10° et 80°.

2. Adaptateur selon la revendication 1,
**caractérisé en ce que**
l'accouplement (5) est relié d'une part à l'arbre d'adaptateur (6) et d'autre part à un arbre de rotor d'un moteur électrique dont la bride ou le carter peut être relié(e) au carter d'adaptateur (7).

3. Adaptateur selon l'une quelconque des revendications précédentes,
**caractérisé en ce que**
l'arbre d'adaptateur (6) traverse la bride de palier (10) et pénètre dans l'espace intérieur entouré par la plaque de fermeture (1) et le carter d'adaptateur (7).

4. Adaptateur selon l'une quelconque des revendications précédentes,
**caractérisé en ce que**
des têtes de vis de vis vissées dans les alésages filetés du carter d'adaptateur (7) pressent la plaque de fermeture (1) contre le carter d'adaptateur (7).

5. Adaptateur selon l'une quelconque des revendications précédentes,
**caractérisé en ce que**
un évidement traversant du carter d'adaptateur (7) est recouvert par une partie fenêtre (4) optiquement transparente.

6. Adaptateur selon l'une quelconque des revendications précédentes,
**caractérisé en ce que**
des alésages traversants (2) traversant le carter d'adaptateur (7) débouchent dans le renfoncement annulaire du carter d'adaptateur (7) au niveau de la région du renfoncement la plus proche de la bride de palier (10).

7. Adaptateur selon l'une quelconque des revendications précédentes,
**caractérisé en ce que**
un joint (8) est accueilli dans un alésage traversant le carter d'adaptateur (7), l'alésage étant conçu comme un alésage axial dans une élévation radiale du carter d'adaptateur (7) formée à l'intérieur du renfoncement.

8. Adaptateur selon l'une quelconque des revendications précédentes,
**caractérisé en ce que**
la région recouverte par le joint (8) dans la direction axiale est comprise dans la région recouverte par l'élévation dans la direction axiale.

9. Adaptateur selon l'une quelconque des revendications précédentes,
**caractérisé en ce que**
le carter d'adaptateur (7) dépasse radialement de la bride de palier (10),
les alésages traversants (2) débouchant dans l'environnement dans la région en saillie du carter d'adaptateur (7).

10. Adaptateur selon l'une quelconque des revendications précédentes,
**caractérisé en ce que**
un autre joint est accueilli dans la bride de palier (10) sur le côté de la mise sur palier qui est axialement opposé au joint (8).

11. Adaptateur selon l'une quelconque des revendications précédentes,
**caractérisé en ce que**
le carter d'adaptateur (7) est plus large radialement sur son côté axialement opposé à la bride de palier (10) que sur son côté tourné vers la bride de palier (10).

12. Adaptateur selon l'une quelconque des revendications précédentes,
**caractérisé en ce que**
la bague extérieure du second palier (11) est accueillie en partie dans la bride de palier (10) et en partie dans le carter d'adaptateur (7).

13. Adaptateur selon la revendication 5,
**caractérisé en ce que**
la partie fenêtre (4) est agencée au niveau du carter d'adaptateur (7) de telle manière que l'accouplement (5) peut être actionné lorsque la partie fenêtre (4) est retirée à travers l'évidement de la partie adaptateur.

14. Adaptateur selon l'une quelconque des revendications précédentes,
**caractérisé en ce que**
la région d'espacement radial recouverte par la plaque de fermeture (1) comprend la région d'espacement radial recouverte par le carter d'adaptateur (7) et la région d'espacement radial recouverte par la bride de palier (10).

15. Moto-réducteur comprenant un adaptateur selon l'une quelconque des revendications précédentes,
**caractérisé en ce que**
une partie carter de transmission d'une transmission du motoréducteur est reliée à la bride de palier (10) sur le côté de la bride de palier (10) qui est opposé au carter d'adaptateur (7).
